# EUROPÄISCHE PATENTSCHRIFT

(11) **EP 1 517 079 B1**
(45) Veröffentlichungstag und Bekanntmachung des Hinweises auf die Patenterteilung: **26.12.2007**
(21) Anmeldenummer: 04021664.0
(22) Anmeldetag: 11.09.2004
(51) Int. Cl.: F17C 11/00

(54) **Transportable Reaktandentankstelle**
Mobile filling station
Station mobile de remplissage

(30) Priorität: 19.09.2003 DE 10343977
(43) Veröffentlichungstag der Anmeldung: 23.03.2005
(73) Patentinhaber: Howaldtswerke-Deutsche Werft GmbH, 24143 Kiel (DE)
(72) Erfinder: Kanning, Michael, Dipl.-Ing., 24536 Neumünster (DE); Looss, Frank, Dipl.-Ing., 22339 Hamburg (DE); Kubisch, Stephan, Dipl.-Ing., 24159 Kiel (DE)
(74) Vertreter: Hemmer, Arnd

(56) Entgegenhaltungen:
- WO-A-20/04068025
- DE-A- 10 241 688
- US-A- 5 762 119
- US-A1- 2002 073 618
- US-A1- 2004 093 874
- US-B1- 6 745 801

## Beschreibung

Die Erfindung betrifft eine transportable Reaktandentankstelle zur Betankung eines mit Brennstoffzellenantrieb ausgerüsteten Unterseeboots.

Es sind Unterseeboote bekannt; welche mit Brennstoffzellenanlagen zur außenluftunabhängigen Energieversorgung ausgestattet sind. Diese Brennstoffzellensysteme benötigen als Reaktanden Wasserstoff und Sauerstoff sowie als Spül- und Pressgas verwendeten Stickstoff. Es ist daher erforderlich, das Unterseeboot mit diesen Verbrauchsstoffen zu betanken. Bislang existieren da zu keine geeigneten Reaktandentankstellen, welche insbesondere die Anforderungen an den maritimen und militärischen Einsatz erfüllen.

In der US 5762119 ist eine transportable Reaktandentankstelle beschrieben worden. In der US 2002/073618 ist ein mit einer integrierten Kühlvorrichtung Wasserstoffspeicher behälter beschrieben worden.

Es ist daher Aufgabe der Erfindung, eine Reaktandentankstelle zur Betankung eines mit Brennstoffzellenantrieb ausgerüsteten Unterseeboots zu schaffen.

Diese Aufgabe wird durch eine transportable Reaktandentankstelle mit den im Anspruch 1 angegebenen Merkmalen gelöst. Bevorzugte Ausführungsformen ergeben sich aus den Unteransprüchen.

Die erfindungsgemäße transportable Reaktandentankstelle zur Betankung eines mit Brennstoffzellenantrieb ausgerüsteten Unterseebootes weist zumindest einen transportablen Ausrüstungscontainer auf. In diesem Ausrüstungscontainer ist zumindest eine Steuereinrichtung bzw. Überwachungseinheit zum Überwachen vorzugsweise des gesamten Betankungsvorganges des Unterseebootes angeordnet. Ferner ist ein vorzugsweise transportabler Dispenser zur Betankung des Unterseebootes mit Wasserstoff vorgesehen. Die Dispensereinheit (Gasführ- und Regelstrecke) bildet die Schnittstelle zwischen dem Anschluss einer gasförmigen Wasserstoffversorgung und dem Anschluss am Unterseeboot. Sie dient dabei zur Regelung des Wasserstoff-Massenstroms und des Wasserstoffdruckes zur kontrollierten Beladung der Metallhydridspeicher in dem Unterseeboot. Die Versorgung erfolgt dabei mit gasförmigem Wasserstoff entweder direkt aus einem Tank (beispielsweise einem Tankwagen) oder von einer Druckerhöhungs- und Verdampfereinheit, falls der Wasserstoff in flüssiger Form angeliefert wird. Der Dispenser dient zur Begrenzung und Kontrolle des H₂-Druckes und -Massenstroms. Insbesondere werden die Metallhydridspeicher in dem Unterseeboot über die Dispensereinheit gegen Überdruck abgesichert, da auf dem Unterseeboot üblicherweise kein Sicherheitsventil vorhanden ist.

Als wesentlichen Bestandteil umfasst die transportable Reaktandentankstelle ferner eine transportable Kühlwassereinrichtung für die Kühlwasserversorgung der in dem Unterseeboot angeordneten Wasserstoffspeicher. Während der Beladung von Metallhydrid-Wasserstoffspeichern mit gasförmigem Wasserstoff (GH₂) wird Wärme freigesetzt, d. h. die Wasserstoffaufnahme erfolgt exotherm. Für eine 100prozentige Beladung der Metallhydridspeicher ist eine konstante Wassertemperatur von maximal 5° C über die gesamte Dauer der Beladung erforderlich, da sonst die Speicherkapazität des Metallhydrids abnimmt. Daher wird der Metallhydridspeicher während der Betankung mit Wasserstoff durch Wasser, vorzugsweise Seewasser gekühlt. Die Kühlwassereinrichtung umfasst alle erforderlichen Anlagenteile zur Versorgung der Metallhydridspeicher mit Kühlwasser. Dies sind insbesondere entsprechende Verbindungsleitungen sowie Pumpeinrichtungen, um dem Unterseeboot und den Metallhydridspeichern das erforderliche Kühlwasser zuzuführen. Sämtliche Anlagenteile der Reaktandentankstelle sind transportabel ausgebildet, so dass die gesamte Reaktandentankstelle leicht an eine Kaianlage transportiert werden kann und dort vorzugsweise durch zwei Personen aufstellbar ist, um ein Unterseeboot mit den Reaktanden Wasserstoff und Sauerstoff und dem Spül- und Pressgas Stickstoff zu betanken.

In dem Ausrüstungscontainer ist vorzugsweise ein Stromverteiler für die Stromversorgung weiterer Anlagenkomponenten vorgesehen. Das heißt die weiteren Anlagenkomponenten, wie Dispenser, Pumpen, Druckerhöhungs- und Verdampfereinheit und andere elektrisch betriebene Einrichtungen können an den Stromverteiler des Ausrüstungscontainers angeschlossen werden. Der Stromverteiler wiederum besitzt entsprechende Schnittstellen zur externen Stromversorgung, welche bevorzugt wahlweise mit 400 V, 50 Hz oder 440 V, 60 Hz (entsprechend NATO-Landanschluss) erfolgen kann. Ferner ist vorzugsweise ein Anschlusspunkt zur Erdung des Ausrüstungscontainers vorgesehen.

Der Dispenser ist bevorzugt in dem Ausrüstungscontainer angeordnet. Dabei ist der Dispenser vorzugsweise rollbar und aus dem Ausrüstungscontainer entnehmbar. Auf diese Weise wird die Anzahl der zu transportierenden Anlagenteile reduziert, so dass die Gesamtanlage leicht an den gewünschten Einsatzort verlegt werden kann. Darüber hinaus ist der Dispenser in dem Ausrüstungscontainer vor Beschädigungen geschützt. Zum Betrieb der Anlage kann der Dispenser dann außerhalb des Ausrüstungscontainers aufgestellt werden, wobei die Steuereinrichtung des Dispensers vorzugsweise wie auch die Überwachungseinheit fest installiert in dem Ausrüstungscontainer verbleibt.

Weiter bevorzugt ist auch die Kühlwassereinrichtung in dem Ausrüstungscontainer untergebracht, wobei die Kühlwassereinrichtung aus dem Ausrüstungscontainer entnehmbar ist. So kann die gesamte Kühlwassereinrichtung, insbesondere Verbindungsleitungen und Pumpen zum Transport in dem Ausrüstungscontainer sicher verstaut werden. Bei Inbetriebnahme der Anlage werden die Teile der Kühlwassereinrichtung aus dem Ausrüstungscontainer entnommen und in der Nähe des Unterseebootes bzw. des Wassers aufgestellt, um das Unterseeboot mit dem erforderlichen Kühlwasser, vorzugsweise Seewasser, zur Kühlung der Hydridspeicher bei Betankung mit Wasserstoff zu versorgen.

Die Kühlwassereinrichtung weist vorzugsweise eine Pumpeneinheit auf, welche mit dem Stromverteiler elektrisch verbindbar und im Betrieb vorzugsweise von der Überwachungseinheit überwachbar ist. Dies ermöglicht, auch die Pumpen der Kühlwassereinrichtung zentral über den Stromverteiler mit Strom zu versorgen. Darüber hinaus ermöglicht die Verbindung mit der Überwachungseinheit in dem Ausrüstungscontainer, dass auch der Kühlvorgang während der Betankung von der Überwachungseinheit überwacht werden kann, um die Metallhydridspeicher auf der zur vollständigen Betankung erforderlichen Temperatur zu halten. Beispielsweise kann die Kühlwassereinrichtung eine eigene Steuer- und Regeleinheit aufweisen, welche im Falle von Störungen Störsignale an die Überwachungseinheit in dem Ausrüstungscontainer sendet, welche dann dem Benutzer eine Störung signalisieren und/oder den Betankungsvorgang unterbrechen kann.

Gemäß einer speziellen Ausführungsform ist zusätzlich ein transportabler Kaltwassersatz zur Kühlung des von der Kühlwassereinrichtung geförderten Kühlwassers vorgesehen. Ein solcher Kaltwassersatz ist erforderlich, um das zur Kühlung verwendete Seewasser zu kühlen, falls die Seewassertemperatur höher als 5 ° C ist. Zur vollständigen Betankung der Metallhydrid-Wasserstoffspeicher muss während des gesamten Betankungsvorgangs eine Kühlwassertemperatur von maximal 5 ° C sichergestellt sein. Falls das umgebende Seewasser wärmer ist, ist entweder keine vollständige Befüllung der Metallhydrid-Wasserstoffspeicher erforderlich, oder es muss ein entsprechender Kaltwassersatz eingesetzt werden, um das Seewasser auf die gewünschte Temperatur herunterzukühlen. Der Kaltwassersatz enthält eine Kühleinrichtung, deren erforderliche Leistung von den Umgebungsparametern, insbesondere von der Temperatur des zur Verfügung stehenden Seewassers abhängt. Der Kaltwassersatz ist vorzugsweise unabhängig von den übrigen Anlagenteilen ausgebildet, so dass er nur bereitgestellt werden muss, falls die Seewassertemperatur zu hoch ist und eine Kühlung erforderlich ist. Die elektrische Versorgung des Kaltwassersatzes erfolgt entweder separat oder ebenfalls über den Stromverteiler des Ausrüstungscontainers. Zusätzlich ist aus Sicherheitsgründen vorzugsweise eine Erdung des Kaltwassersatzes vorgesehen. Zur Regelung des Kühlaggregates des Kaltwassersatzes ist in diesem vorzugsweise eine eigen Steuer- und Regeleinheit vorgesehen, welche mit der zentralen Überwachungseinheit in dem Ausrüstungscontainer verbindbar ist, um im Falle von Störungen Störsignale an diese zu übertragen.

Gemäß einer weiteren besonderen Ausführungsform ist eine transportable Druckerhöhungs- und Verdampfereinheit vorgesehen, welche mit dem Dispenser verbindbar ist um flüssigen Wasserstoff zu verdampfen und dem Dispenser zuzuführen. Eine solche Druckerhöhungs- und Verdampfereinheit ist erforderlich, falls der Wasserstoff zur Betankung des Unterseebootes in flüssiger Form bereitgestellt wird, da sich die Metallhydrid-Wasserstoffspeicher eines Unterseebootes ausschließlich mit gasförmigen Wasserstoff betanken lassen. Die Druckerhöhungs- und Verdampfereinheit ist vorzugsweise als separate Einheit ausgebildet, so dass diese Einheit der Reaktandentankstelle nur dann bereitgestellt werden muss, wenn der Wasserstoff in flüssiger Form angeliefert wird. Falls der Wasserstoff in gasförmiger Form angeliefert wird, kann auf die Druckerhöhungs- und Verdampfereinheit verzichtet werden, so dass diese nicht zur Kaianlage transportiert werden muss.

Die Druckerhöhungs- und Verdampfereinheit ist vorzugsweise mit dem Stromverteiler in dem Ausrüstungscontainer elektrisch verbindbar und vorzugsweise durch die Überwachungseinheit überwachbar. Auf diese Weise kann auch die Stromversorgung der Druckerhöhungs- und Verdampfereinheit zentral über den Stromverteiler in dem Ausrüstungscontainer erfolgen. Wenn die Druckerhöhungs- und Verdampfereinheit mit der Überwachungseinheit des Ausrüstungscontainers verbunden ist, kann diese ebenfalls die Überwachung des Verdampfungsvorganges des flüssigen Wasserstoffes beim Betanken des Unterseebootes übernehmen. Dazu kann die Druckerhöhungs- und Verdampfereinheit mit einer eigenen Steuer- und Regeleinrichtung versehen sein, welche lediglich bei Störungen Störsignale an die Überwachungseinheit in dem Ausrüstungscontainer sendet. Die Überwachungseinheit dient dabei als zentrale Überwachungseinrichtung, welche den gesamten Betankungsvorgang überwacht. Neben den elektrischen Anschlüssen zur Stromversorgung und zur Verbindung mit der Überwachungseinheit in dem Ausrüstungscontainer weist die Druckerhöhungs- und Verdampfereinheit ferner aus Sicherheitsgründen vorzugsweise einen Anschluss zur Erdung dieses Anlagenteils auf.

Besonders bevorzugt sind der Ausrüstungscontainer, der Kaltwassersatz und/oder die Druckerhöhungs- und Verdampfereinheit als Standardcontainer und insbesondere als 20'- Standardcontainer oder - Containerrahmen ausgebildet. Die Ausbildung der einzelnen Anlagenteile als Standardcontainer ermöglicht einen leichten Transport der gesamten Reaktandentankstelle zu Land, zur Luft und zur See, wobei alle zum Transport von Standardcontainer geeignete Transportmittel verwendet werden können. So sind keine speziellen Transportfahrzeuge erforderlich. Darüber hinaus bieten die Container bzw. Containerrahmen beim Transport einen guten Schutz der einzelnen Anlagenteile. So können die Container und Containerrahmen insbesondere seewasserfest ausgebildet werden. Dazu ist eine schwere Ausführung der Container mit Schiffstür und Schiffsfenster bevorzugt. Wenn die Anlage nicht benötigt wird, können die Container leicht gestapelt und eingelagert werden. In einer Minimalausführung weist die Reaktandentankstelle vorzugsweise zumindest den Ausrüstungscontainer auf, in welchem der Dispenser und die Überwachungseinheit sowie die erforderlichen Schlauchleitungen und elektrischen Leitungen zum Anschluss der Anlage verstaut werden. Der Dispenser ist vorzugsweise rollbar, so dass er zum Betrieb aus dem Ausrüstungscontainer entnommen werden kann, während Stromverteiler, Überwachungseinheit und Steuereinrichtung für den Dispenser in dem Ausrüstungscontainer vorzugsweise fest installiert sind. Darüber hinaus ist in dem Container die Kühlwassereinrichtung mit Kühlwasserpumpe und Schlauchleitungen angeordnet, so dass in dem Container auch sämtliche zur Kühlung der Metallhydrid-Wasserstoffspeicher erforderlichen Einrichtungen vorhanden sind. So muss bei der Minimalkonfiguration lediglich der Ausrüstungscontainer an den Pier gebracht werden, um ein Unterseeboot mit den separat bereitgestellten Reaktanden zu betanken. Die Druckerhöhungs- und Verdampfereinheit ist vorzugsweise in einem zweiten Container untergebracht, welcher nur an den Pier gebracht werden muss, falls der Wasserstoff in flüssiger Form angeliefert wird. Auch der Kaltwassersatz ist vorzugsweise in einem separaten Container untergebracht, welcher nur an den Pier gebracht werden muss, wenn das zur Kühlung zur Verfügung stehende Seewasser eine zu hohe Temperatur aufweist. In der Vollversion weist die transportable Reaktandentankstelle somit vorzugsweise drei in ihren Abmessungen 20'- Standardcontainern entsprechende Container auf. Zusätzlich kann ein vierter Transportcontainer vorgesehen werden, um Ausrüstungsteile aufzunehmen, welche nicht in den übrigen Containern verstaut werden können. Darüber hinaus ist bevorzugt in einem der Container, besonders bevorzugt in dem Ausrüstungscontainer, ein Aufenthaltsraum für eine Bedienperson vorgesehen, um diese vor der Witterung zu schützen.

Weiter bevorzugt sind Einrichtungen zur Betankung des Unterseebootes mit tiefkaltem Sauerstoff in dem Ausrüstungscontainer entnehmbar untergebracht. Eine Betankung des Unterseeboot mit Sauerstoff ist erforderlich, um einen außenluftunabhängigen Betrieb der Brennstoffzellenanlage zu gewährleisten. Die Einrichtungen zur Betankung mit Sauerstoff umfassen vor allem Schlauchleitungen, um einen Tank bzw. Tankwagen mit tiefkaltem Sauerstoff mit den Tankanschlüssen des Unterseebootes zu verbinden. Zusätzlich können elektrische Verbindungsleitungen vorgesehen sein, welche die Überwachungseinheit in dem Ausrüstungscontainer mit dem Sauerstofftankwagen und/oder dem Unterseeboot verbinden, um den Tankvorgang mit Sauerstoff zu überwachen und zu steuern. Die erforderlichen Leitungen können ebenfalls in dem Ausrüstungscontainer verstaut werden oder im Unterseeboot gelagert sein.

Weiter bevorzugt sind in dem Ausrüstungscontainer Einrichtungen zur Betankung des Unterseebootes mit Stickstoff entnehmbar untergebracht. Diese Einrichtung besteht vorzugsweise aus einer tragbaren Kompressorstation und den erforderlichen Schlauchleitungen und Anschlüssen, um einen Stickstoff-Druckgasbehälter mit dem Betankungsanschluss des Unterseebootes zu verbinden. Die Teile der Einrichtung zur Betankung des Unterseebootes mit Stickstoff sind derart entnehmbar in dem Ausrüstungscontainer verstaut, dass sie aus dem Ausrüstungscontainer entnommen werden und in die Nähe des Unterseebootes gebracht werden können, um dieses mit Stickstoff zu betanken.

Weiter bevorzugt ist ein zusätzlicher Transportcontainer zur Aufnahme von Ausrüstungsgegenständen vorgesehen, wobei der Transportcontainer zur Stromversorgung ebenfalls elektrisch mit dem Stromverteiler in dem Ausrüstungscontainer verbindbar ist. Auf diese Weise dient der Stromverteiler des Ausrüstungscontainers als zentrale Stromversorgung für die verschiedenen Anlagenteile. In dem Transportcontainer kann beispielsweise eine elektrisch betriebene Beleuchtungseinrichtung vorgesehen sein.

Sämtliche Schlauch- und Verbindungsleitungen, welche Anlagenteile mit dem Unterseeboot verbinden, sind vorzugsweise derart lang und flexibel ausgebildet, dass das Unterseeboot bei unterschiedlichen Pierhöhen mit den Anlagenteilen verbindbar ist und auch Höhenunterschiede beispielsweise aufgrund des Tidenhubes ausgeglichen werden können. Insbesondere sind auch Kaltwassersatz und Kühlwassereinrichtung so ausgebildet, dass Seewasser bei unterschiedlichen Pierhöhen angesaugt werden und als Kühlwasser zu den Metallhydrid-Wasserstoffspeichern des Unterseeboots geleitet werden kann. Die Schläuche zur Verbindung mit dem Unterseeboot sind vorzugsweise mit einer Übergabeeinrichtung zum Boot, Zugentlastungen sowie einem Schutz vor Beschädigungen versehen.

Nachfolgend wird die Erfindung beispielhaft anhand der beigefügten Figuren beschrieben. In diesen zeigt:
- Fig. 1: ein schematisches Blockdiagramm der erfindungsgemäßen Reaktandentankstelle und
- Fig. 2: schematisch den Aufbau der Reaktandentankstelle am Pier zur Betankung eines Unterseebootes.

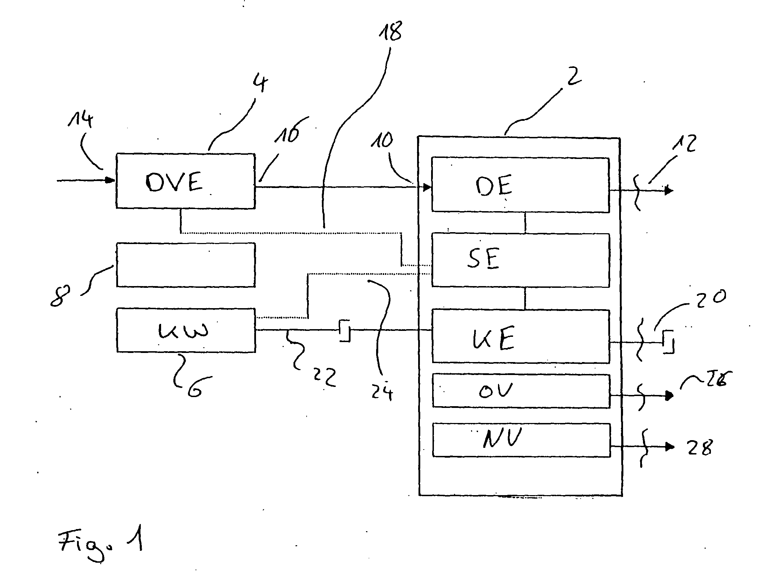

Fig. 1 zeigt schematisch in einem Blockdiagramm den Aufbau der Vollversion einer erfindungsgemäßen Reaktandentankstelle. Die beispielhaft gezeigte Vollversion besteht aus vier Containern, dem Ausrüstungscontainer 2 einem Container 4 mit der Druckerhöhungs- und Verdampfereinheit DVE, einem Container 6 mit dem Kaltwassersatz KW sowie einem Transportcontainer 8.

Kernstück der transportablen Reaktandentankstelle ist der Ausrüstungscontainer 2. In dem Ausrüstungscontainer 2 ist eine Dispensereinheit DE angeordnet, welche als Gasführ- und Regelstrecke für die Betankung der Metallhydridspeicher des Unterseebootes mit gasförmigem Wasserstoff dient und rollbar ausgebildet ist, so dass sie zum Betrieb der Anlage aus dem Ausrüstungscontainer 2 entnommen werden kann. Über die Dispensereinheit wird der Massenstrom und der Druck bei der Beladung der Metallhydridspeicher mit gasförmigem Wasserstoff eingestellt bzw. geregelt. Darüber hinaus wird die maximale Belademenge sowie der maximale Beladedruck über die Dispensereinheit geregelt. Die Dispensereinheit dient ferner zur Absicherung der Metallhydridspeicher gegen Überdruck, da auf dem Unterseeboot üblicherweise keine Sicherheitsventile vorgesehen sind. Ferner ist in dem Ausrüstungscontainer 2 eine Überwachungs- bzw. Steuer- und Regeleinheit SE untergebracht, welche als zentrale Überwachungseinheit den gesamten Betankungsvorgang des Unterseebootes mit den Reaktanden überacht. Ferner ist in dem Ausrüstungscontainer eine Steuer- und Regeleinheit für den Dispenser fest angeordnet, welche mit der Dispensereinheit DE verbunden ist, um diese zu steuern bzw. zu regeln. Diese Steuer- und Regeleinheit verbleibt auch beim Betrieb der Anlage in dem Ausrüstungscontainer. Die Steuer- und Regeleinheit für den Dispenser sowie die Überwachungseinheit sind als separate Schaltschränke fest in dem Ausrüstungscontainer installiert, wobei die Steuer- und Regeleinheit derart mit der Überwachungseinheit verbunden sein kann, dass Stör- oder Steuerungssignale zwischen den Einheiten übertragen werden können.

Darüber hinaus ist in dem Ausrüstungscontainer 2 eine Kühlwassereinrichtung KE untergebracht, welche aus dem Ausrüstungscontainer 2 entnehmbar ist. Die Kühlwassereinrichtung KE besteht aus zumindest einer Pumpeneinheit und den erforderlichen Schlauchleitungen, um über die Pumpeneinheit Seewasser anzusaugen und den Metallhydridspeichern in dem Unterseeboot zur Kühlung zuzuführen. Die Schlauchleitungen sind ausreichend lang und flexibel ausgebildet, um einen Betrieb der Kühlwassereinheit auch bei unterschiedlichen Pierhöhen und schwankenden Wasserständen sicherstellen zu können. Die Kühlwassereinheit ist aus dem Container entnehmbar, um direkt an den Pier in Nähe des Unterseebootes verbracht werden zu können. Auf diese Weise können die erforderlichen Schlauchleitungen kurz gehalten werden. Die Steuer- und Regeleinrichtung der Kühlwassereinheit KE ist mit der Überwachungseinheit SE verbunden, so dass die Steuer- und Regeleinheit der Kühlwassereinheit Störsignale an die Überwachungseinheit SE übertragen kann. Die Steuer- und Regeleinrichtung der Kühlwassereinheit KE übernimmt deren Steuerung, wobei insbesondere deren Pumpeneinheit derart gesteuert bzw. geregelt wird, dass die Temperatur der Metallhydridspeicher während des Betankungsvorganges auf einem bestimmten Wert gehalten wird.

Darüber hinaus sind in dem Ausrüstungscontainer 2 Einrichtungen OV zur LOX-Versorgung und Einrichtungen NV zur GN₂-Versorgung des Unterseebootes untergebracht. Bei diesen Einrichtungen handelt es sich um die erforderlichen Schlauchverbindungen und Anschlüsse um Tanks mit flüssigem Sauerstoff sowie Druckgasbehälter mit gasförmigem Stickstoff N₂ mit den entsprechenden Betankungsanschlüssen des Unterseebootes verbinden zu können. Für die N₂-Betankung ist ferner eine Kompressorstation, vorzugsweise mit Druckluftantrieb, und ein Druckmindernder vorgesehen. Die Einrichtungen OV und NV sind ebenfalls entnehmbar in dem Ausrüstungscontainer 2 untergebracht, so dass sie bei der Betankung direkt an den Pier verbracht werden können, um dort das Unterseeboot mit den entsprechenden Tanks zu verbinden. Der Sauerstoff dient in dem Unterseeboot zum außenluftunabhängigen Betrieb der Brennstoffzellenanlage. Der Stickstoff N₂ wird als Spül-, Pressund Schutzgas eingesetzt.

Die Dispensereinheit DE wird an ihrem Eingang 10 mit einer Quelle gasförmigen Wasserstoffs GH₂ und an ihrem Ausgang mit einem Gasanschluss 12 der Wasserstoffspeicher des Unterseebootes verbunden. Die Betankung der Metallhydrid-Wasserstoffspeicher des Unterseebootes erfolgt ausschließlich mit gasförmigem Wasserstoff. Dementsprechend muss auch die Dispensereinheit DE mit gasförmigem Wasserstoff versorgt werden. Entweder wird der gasförmige Wasserstoff direkt in entsprechenden Druckgastanks bereitgestellt oder er muss aus flüssigem Wasserstoff erzeugt werden. Dazu ist bei der gezeigten Vollversion als zusätzliche Komponente in dem Container 4 die Druckerhöhungs- und Verdampfereinheit DVE vorgesehen. Die Druckerhöhungs- und Verdampfereinheit DVE wird an ihrem Eingang 14 mit flüssigem Wasserstoff LH₂ aus einem entsprechendem Tank, z. B. einem Tankwagen oder Tankcontainer versorgt. An ihrem Ausgang 16 gibt die Druckerhöhungsund Verdampfereinheit DVE gasförmigen Wasserstoff ab, welcher dem Eingang 10 der Dispensereinheit DE zugeführt wird. Die Druckerhöhungsund Verdampfereinheit DVE ist über eine Leitung bzw. Leitungen 18 mit der Überwachungseinheit SE und dem Stromverteiler in dem Ausrüstungscontainer 2 zur Steuerung und Stromversorgung verbunden. Die Druckerhöhungs- und Verdampfereinheit DVE weist eine eigene Steuerund Regeleinrichtung auf, welche mit der Überwachungseinheit SE in dem Ausrüstungscontainer verbunden ist, um Störsignale an diese senden zu können. So wird der Betrieb der Druckerhöhungs- und Verdampfereinheit DVE über die Steuer- und Regeleinheit gesteuert bzw. geregelt und durch die Überwachungseinheit SE überwacht. Die Stromversorgung der Druckerhöhungs- und Verdampfereinheit DVE kann entweder über einen im Ausrüstungscontainer 2 vorgesehenen zentralen Stromverteiler (hier nicht gezeigt) oder über einen separaten Stromanschluss erfolgen.

Die Kühlwassereinrichtung KE saugt über ihre Pumpeneinheit Seewasser an und führt dieses über entsprechende Schlauchleitungen einem Kühlwasseranschluss der Wasserstoffspeicher in dem Unterseeboot zu. Wenn das umgebende Seewasser eine zu hohe Temperatur aufweist, ist eine zusätzliche Kühlung des Wassers erforderlich. So muss zur vollständigen Betankung der Metallhydrid-Wasserstoffspeicher eine maximale konstante Kühlwassertemperatur von 5° C sichergestellt werden. Zur Kühlung des Kühlwassers ist der Kaltwassersatz KW in dem Container 6 vorgesehen. Dieser ist über eine Schlauchleitung 22 mit der Kühlwassereinheit KE verbunden, die das von dem Kaltwassersatz KW gekühlte Kühlwasser dem Wasseranschluss 20 des Unterseebootes zuführt. Ferner ist der Kaltwassersatz KW über elektrische Leitungen 24 mit dem Ausrüstungscontainer bzw. mit der Überwachungseinheit SE verbunden, um Störsignale von einer Steuer- und Regeleinrichtung des Kaltwassersatzes an die zentrale Überwachungseinheit übertragen zu können. So kann die Überwachungseinheit SE auch die Kühlung des Kühlwassers entsprechend überwachen, so dass eine ausreichende Kühlwassermenge mit der gewünschten Temperatur bereitgestellt wird, um die Wasserstoffspeicher der Unterseebootes während des Betankungsvorganges auf der gewünschten Maximaltemperatur zu halten. Die Stromversorgung erfolgt entweder über den zentralen Stromverteiler in dem Ausrüstungscontainer 2 oder über einen separaten Stromanschluss.

Der zusätzliche Transportcontainer 8 dient zur Aufnahme weiterer Ausrüstungsgegenstände, welche nicht in den drei anderen Containern 2, 4 und 6 untergebracht werden können. So kann die gesamte Reaktandentankstelle in vier 20' (20 Fuß) - Standardcontainer bzw. Standardcontainerrahmen untergebracht werden, welche einen leichten Transport der gesamten Anlage zu Land, zu Wasser oder zur Luft ermöglicht. Es sind keine speziellen Transportfahrzeuge erforderlich.

Die Einrichtungen zur LOX-Versorgung sowie zur GN₂-Versorgung sind mit einem LOX-Anschluss 26 bzw. eine GN₂-Anschluss 28 des Unterseebootes verbindbar.

Alle Anlagenteile der Reaktandentankstelle können über den zentralen Stromverteiler des Ausrüstungscontainers 2 mit Strom versorgt werden. Zusätzlich werden vorzugsweise alle Anlagenteile zur Vermeidung einer Explosionsgefahr geerdet. Der Stromverteiler des Ausrüstungscontainers besitzt entsprechende Schnittstellen, zur externen Spannungs- bzw. Stromversorgung. Diese Schnittstellen sind an die allgemein zur Verfügung stehenden elektrischen Standard angepasst, weisen so wahlweise 400 V, 50 Hz oder 440 V, 60 Hz (entsprechend NATO-Landanschluss) auf.

Die beschriebene Anlage ist die Vollversion der erfindungsgemäßen Reaktandentankstelle. Gegebenenfalls kann auf einige der Anlagenteile verzichtet werden. So ist der Container 4 mit der Druckerhöhungsund Verdampfereinheit DVE nicht erforderlich, falls direkt gasförmiger Wasserstoff angeliefert wird. Der Container 6 mit dem Kaltwasser KW ist nicht erforderlich, falls das zur Verfügung stehende Seewasser eine ausreichend geringe Temperatur von weniger als 5° C aufweist oder nur eine Teilbetankung der Wasserstoffspeicher erforderlich ist, welche bei höheren Temperaturen erfolgen kann. Falls sich die erforderlichen Ausrüstungsgegenstände vollständig in den übrigen Containern 2, 4 und 6 unterbringen lassen, kann ebenfalls auf den zusätzlichen Transportcontainer verzichtet werden. In der Minimalversion ist somit lediglich der Ausrüstungscontainer 2 erforderlich, in welchem alle wesentlichen Anlagenteile und Ausrüstungsgegenstände der Reaktandentankstelle untergebracht sind. Zusätzlich kann in dem Ausrüstungscontainer 2 ein Aufenthaltsraum für eine Bedienperson vorgesehen sein, so dass die Bedienperson geschützt vor Witterungseinflüssen die Anlage bei der Betankung bedienen kann.

Die einzelnen Anlagenkomponenten können auch anders auf mehrere Container aufgeteilt werden. So könnte beispielsweise die Dispensereinheit DE ebenfalls in den Container 4 mit der Druckerhöhungs- und Verdampfereinheit DVE untergebracht werden, was jedoch den Nachteil hätte, dass der Container 4 immer erforderlich wäre, auch wenn direkt gasförmiger Wasserstoff angeliefert würde, da dann die Dispensereinheit DE nicht unabhängig von der Druckerhöhungs- und Verdampfereinheit DVE an den Pier gebracht werden könnte.

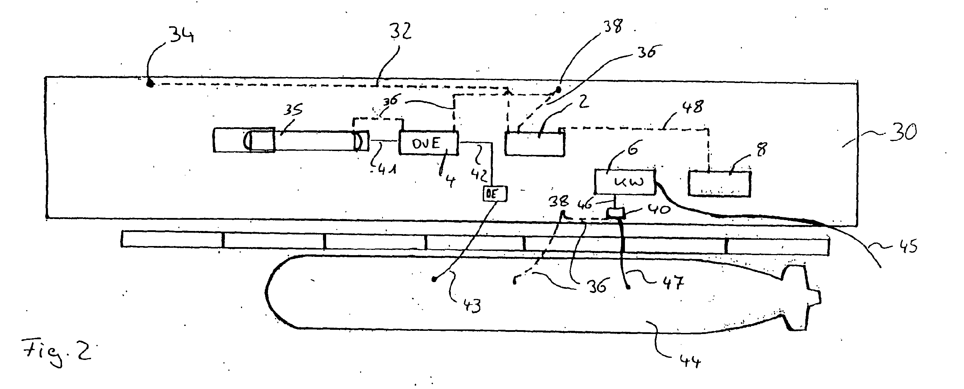

Fig. 2 zeigt schematisch die Aufstellung der anhand von Fig. 1 beschriebenen Vollversion der Reaktandentankstelle an einem Pier 30. Auf dem Pier 30 sind der Ausrüstungscontainer 2, die Container 4 und 6 sowie der Transportcontainer 8 aufgestellt. Bei der Aufstellung sind ggf. zwischen den einzelnen Anlageteilen bestimmte Sicherheitsabstände aufgrund der Explosionsgefahr einzuhalten. Der Ausrüstungscontainer 2 ist über eine elektrische Anschlussleitung 32 mit einem Stromanschluss 34 verbunden, um den zentralen Stromverteiler in dem Ausrüstungscontainer 2 zu versorgen. Darüber hinaus sind zwischen den Containern sowie einem LH₂-Lkw 35 und dem Container 4 mit der Druckerhöhungs- und Verdampfereinheit DVE sowie zwischen der Druckerhöhungs- und Verdampfereinheit DVE und dem Ausrüstungscontainer 2 sowie dem Pumpenaggregat 40, der Kühlwassereinheit KE und dem Unterseeboot elektrische Leitungen 36 zum Potentialausgleich und zur Verbindung mit Erdungspunkten 38 vorgesehen.

Der Wasserstoff wird in flüssiger Form in dem Lkw 35 angeliefert und über eine Leitung 41 der Druckerhöhungs- und Verdampfereinheit DVE zugeführt. Von der Druckerhöhungs- und Verdampfereinheit in dem Container 4, welche den flüssigen Wasserstoff verdampf, wird der nun gasförmige Wasserstoff über eine weitere Leitung 42 der Dispensereinheit DE zugeführt, welche aus dem Ausrüstungscontainer 2 entnommen und außerhalb von diesem aufgestellt ist. Die Dispensereinheit DE ist zu ihrer Steuerung bzw. Regelung über eine entsprechende Leitung (hier nicht gezeigt) mit der zugehörigen Steuerungs- und Regelungseinrichtung in dem Ausrüstungscontainer 2 verbunden. Von der Dispensereinheit DE wird der gasförmige Wasserstoff über eine weitere, flexible Leitung 43 zu einem Betankungsanschluss an dem Unterseeboot 44 zugeführt. Neben den Wasserstoffleitungen 41 und 42 sind zwischen dem Ausrüstungscontainer 2 und dem Container 4 sowie dem Lkw 35 weitere Signalleitungen und Stromleitungen zur Stromversorgung und Überwachung der Druckerhöhungs- und Verdampfereinheit durch die in dem Ausrüstungscontainer 2 angeordnete Überwachungseinheit SE vorgesehen, welche hier nicht einzeln gezeigt sind.

Zur Kühlung der Metallhydrid-Wasserstoffspeicher in dem Unterseeboot 44 während des Betankungsvorganges sind der Kaltwassersatz KW in dem Container 6 sowie die Kühlwassereinheit KE im Wesentlichen bestehend aus dem Pumpenaggregat 40 und den Schlauchleitungen 45, 46 und 47, vorgesehen. Über die Schlauchleitung 45 wird Seewasser angesaugt und dem Kaltwassersatz KW in dem Container 6 zugeführt. Dort wird das Wasser gekühlt und durch das Pumpenaggregat 40 über die Schlauchleitungen 46 und 47 einem Kühlwasseranschluss des Unterseebootes 44 zugeführt. Die elektrische Versorgung des Kaltwassersatzes KW in dem Container 6 sowie des Pumpenaggregates 40 erfolgt entweder über separate Stromanschlüsse oder über den zentralen Stromverteiler in dem Ausrüstungscontainer 2. Die entsprechenden elektrischen Anschlussleitungen sind hier nicht gezeigt. Zusätzlich sind Datenleitungen vorgesehen, welche die Überwachungseinheit SE in dem Ausrüstungscontainer 2 mit dem Kaltwassersatz KW und dem Pumpenaggregat 40 zu deren Überwachung verbinden.

Der Transportcontainer 8 dient zur Lagerung bzw. zum Transport von Ausrüstungsgegenständen, welche in keinem der anderen Container untergebracht sind. Zur Stromversorgung, beispielsweise einer Beleuchtungsanlage in dem Transportcontainer 8, ist eine elektrische Anschlussleitung 48 zur Verbindung mit dem Stromverteiler in dem Ausrüstungscontainer 2 vorgesehen.

Zusätzlich weist die Vollversion der Reaktandentankstelle noch die Anlagenteile zur LOX-Versorgung sowie zur GN₂-Versorgung auf, welche in dem Ausrüstungscontainer 2 gelagert und transportiert werden und bei der Betankung separat am Pier 30 aufgestellt werden. Diese Anlagenteile sind in Fig. 2 nicht gezeigt. Die Betankung mit flüssigem Sauerstoff (LOX) und gasförmigem Stickstoff (GN₂) erfolgt über die entsprechenden Ausrüstungsgegenstände direkt aus den Flüssiggas- bzw. Druckgastanks, in denen der flüssige Sauerstoff sowie gasförmiger Stickstoff bereitgestellt werden.

In Teilversionen der Anlage kann auf den Container 4 mit der Druckerhöhungs- und Verdampfungseinheit DVE verzichtet werden, wenn der Wasserstoff direkt in gasförmiger Form bereitgestellt wird. Ferner kann auf den Container 6 mit dem Kaltwassersatz verzichtet werden, wenn das Seewasser eine zur Kühlung ausreichend geringe Temperatur aufweist oder nur eine Teilbeladung mit Wasserstoff durchgeführt wird. In diesem Fall saugt das Pumpenaggregat 40 das Kühlwasser direkt über die Schlauchleitung 45 an und führt es über die Schlauchleitung 47 den Kühlwasseranschlüssen des Unterseebootes zu.

Der gesamte Betankungsvorgang wird vorzugsweise von einer in dem Ausrüstungscontainer 2 vorgesehenen Überwachungseinheit überwacht. Auch die gesamt Stromversorgung der Anlage erfolgt vorzugsweise zentral über einen Stromverteiler in dem Ausrüstungscontainer 2. Dadurch können alle Anlagenteile von dem Ausrüstungscontainer 2 aus ein- und ausgeschaltet werden, ferner werden eventuelle Störungen, welche von den Steuer- und Regeleinheiten der einzelnen Komponenten erfasst werden der zentralen Überwachungseinheit SE signalisiert und dort zur Anzeige gebracht. So wird der Anschluss, die Inbetriebnahme und der Betrieb der Anlage vereinfacht. Vorzugsweise ist die gesamte Anlage so ausgebildet, dass sie durch zwei Personen leicht in Betrieb genommen und die Betankung durchgeführt werden kann.

### Bezugszeichenliste

- 2: Ausrüstungscontainer
- 4, 6: Container
- 8: Transportcontainer
- 10: Eingang
- 12: Gasanschluss H₂-Speicher
- 14: Eingang
- 16: Ausgang
- 18: Leitung
- 20: Wasseranschluss
- 22: Schlauchleitung
- 24: Leitung
- 26: LOX-Anschluss
- 28: GN₂-Anschluss
- 30: Pier
- 32: elektrische Anschlussleitung
- 34: Stromanschluss
- 35: LH₂-Lkw
- 36: Leitungen
- 38: Erdungspunkt
- 40: Pumpenaggregat
- 41, 42, 43: H₂-Leitungen
- 44: Unterseeboot
- 45, 46, 47: Schlauchleitungen
- 48: Anschlussleitung
- DVE: Druckerhöhungs- und Verdampfereinheit
- KW: Kaltwassersatz
- DE: Dispensereinheit
- SE: Überwachungseinheit
- KE: Kühlwassereinheit
- OV: LOX-Versorgung
- NV: GN₂-Versorgung

## Patentansprüche

1. Transportable Reaktandentankstelle zur Betankung eines mit Brennstoffzellenantrieb ausgerüsteten Unterseebootes (44), bei welcher zumindest ein transportabler Ausrüstungscontainer (2), in dem eine Überwachungseinrichtung (SE) zur Überwachung des Betankungsvorganges angeordnet ist, ein vorzugsweise transportabler Dispenser (DE) zur Betankung des Unterseebootes (44) mit Wasserstoff sowie eine transportable Kühlwassereinrichtung (KE) für die Kühlwasserversorgung der in dem Unterseeboot (44) angeordneten Wasserstoffspeicher vorgesehen sind.

2. Reaktandentankstelle nach Anspruch 1, bei welcher in dem Ausrüstungscontainer (2) ein Stromverteiler für die Stromversorgung weiterer Anlagenkomponenten vorgesehen ist.

3. Reaktandentankstelle nach Anspruch 1 oder 2, bei welcher der Dispenser (DE), vorzugsweise entnehmbar, in dem Ausrüstungscontainer (2) angeordnet ist.

4. Reaktandentankstelle nach einem der Ansprüche 1 bis 3, bei welcher die Kühlwassereinrichtung (KE) in dem Ausrüstungscontainer (2) entnehmbar untergebracht ist.

5. Reaktandentankstelle nach einem der Ansprüche 2 bis 4, bei welcher die Kühlwassereinrichtung (KE) eine Pumpeneinheit (40) aufweist, welche mit dem Stromverteiler elektrisch verbindbar und deren Betrieb vorzugsweise von der Überwachungseinrichtung (SE) überwachbar ist.

6. Reaktandentankstelle nach einem der vorangehenden Ansprüche, bei welcher ein transportabler Kaltwassersatz (KW) zur Kühlung des von der Kühlwassereinrichtung (KE) geförderten Kühlwassers vorgesehen ist.

7. Reaktandentankstelle nach einem der vorangehenden Ansprüche, bei welcher eine transportable Druckerhöhungs- und Verdampfereinheit (DVE) vorgesehen ist, welche mit dem Dispenser (DE) verbindbar ist, um flüssigen Wasserstoff zu verdampfen und dem Dispenser (DE) zuzuführen.

8. Reaktandentankstelle nach Anspruch 7, bei welcher die Druckerhöhungs- und Verdampfereinheit (DVE) mit dem Stromverteiler elektrisch verbindbar und im Betrieb vorzugsweise von der Überwachungseinrichtung (SE) überwachbar ist.

9. Reaktandentankstelle nach einem der vorangehenden Ansprüche, bei welcher der Ausrüstungscontainer (2), der Kaltwassersatz (KW) und/oder die Druckerhöhungs- und Verdampfereinheit (DVE) als 20'-Standard-Container oder Standardcontainer und insbesondere als -Containerrahmen (2, 4, 6) ausgebildet sind.

10. Reaktandentankstelle nach einem der vorangehenden Ansprüche, bei welcher Einrichtungen (OV) zur Betankung des Unterseebootes (44) mit tiefkaltem Sauerstoff in dem Ausrüstungscontainer (2) entnehmbar untergebracht sind.

11. Reaktandentankstelle nach einem der vorangehenden Ansprüche, bei welcher Einrichtungen (NV) zur Betankung des Unterseebootes (44) mit Stickstoff in dem Ausrüstungscontainer (2) entnehmbar untergebracht sind.

12. Reaktandentankstelle nach einem der Ansprüche 2 bis 11, bei welcher ein zusätzlicher Transportcontainer (8) zur Aufnahme von Ausrüstungsgegenständen vorgesehen ist, der zur Stromversorgung elektrisch mit dem Stromverteiler in dem Ausrüstungscontainer (2) verbindbar ist.

## Claims

1. A transportable reactand filling station for fuel filling a submarine (44) equipped with a fuel cell drive, with which at least one transportable equipping container (2), in which a monitoring device (SE) for monitoring the fuel filling procedure is arranged, a preferably transportable dispenser (DE) for fuel filling the submarine (44) with hydrogen, as well as a transportable cooling water device (KE) for the supply of cooling water to the hydrogen storage device arranged in the submarine (44), are provided.

2. A reactand filling station according to claim 1, with which a current distributor for the supply of electricity to further installation components, is provided in the equipping container (2).

3. A reactand filling station according to claim 1 or 2, with which the dispenser (DE) is arranged in the equipping container (2), preferably in a removable manner.

4. A reactand filling station according to one of the claims 1 to 3, with which the cooling water device (KE) is accommodated in the equipping container (2) in a removable manner.

5. A reactand filling station according to one of the claims 2 to 4, with which the cooling water device (KE) comprises a pump unit (40), which is electrically connectable to the current distributor and whose operation may be monitored preferably by the monitoring device (SE).

6. A reactand filling station according to one of the preceding claims, with which a transportable cold water unit (KW) for cooling the cooling water delivered by the cooling water device (KE) is provided.

7. A reactand filling station according to one of the preceding claims, with which a transportable pressure increase and evaporator unit (DVE) is provided, which may be connected to the dispenser (DE), in order to evaporate fluid hydrogen and lead it to the dispenser (DE).

8. A reactand filling station according to claim 7, with which the pressure increase and evaporator unit (DVE) is electrically connectable to the current distributor and may be monitored in operation, preferably by the monitoring device (SE).

9. A reactand filling station according to one of the preceding claims, with which the equipping container (2), the cold water unit (KW) and/or the pressure increase and evaporator unit (DVE) are designed as 20' standard containers or standard containers, and in particular as standard container frames (2, 4, 6).

10. A reactand filling station according to one of the preceding claims, with which devices (OV) for fuel filling the submarine (44) with cryogenic oxygen are accommodated in the equipping container (2) in a removable manner.

11. A reactand filling station according to one of the preceding claims, with which devices (NV) for fuel filling the submarine (44) with nitrogen are accommodated in the equipping container (2) in a removable manner.

12. A reactand filling station according to one of the claims 2 to 11, with which an additional transport container (8) for receiving equipping objects is provided, which is electrically connectable to the current distributor in the equipping container (2), for the supply of electricity.

## Revendications

1. Station mobile d'approvisionnement en réactifs pour le ravitaillement d'un sous-marin (44) doté d'une propulsion par pile à combustible, dans laquelle sont prévus au moins un conteneur d'armement (2) transportable, dans lequel un dispositif de surveillance (SE) destiné à surveiller l'opération de ravitaillement est disposé, un distributeur (DE), de préférence transportable, pour le ravitaillement du sous-marin (44) en hydrogène, ainsi qu'un système d'eau de refroidissement (KE), transportable, pour l'alimentation en eau de refroidissement du réservoir d'hydrogène disposé dans le sous-marin (44).

2. Station d'approvisionnement en réactifs selon la revendication 1, dans laquelle un répartiteur de courant est prévu dans le conteneur d'armement (2), pour l'alimentation en courant de composants d'installation supplémentaires.

3. Station d'approvisionnement en réactifs selon la revendication 1 ou 2, dans laquelle le distributeur (DE) est disposé dans le conteneur d'armement (2), de préférence avec la possibilité d'en être retiré.

4. Station d'approvisionnement en réactifs selon l'une des revendications 1 à 3, dans laquelle le système d'eau de refroidissement (KE) est logé dans le conteneur d'armement (2), avec la possibilité d'en être retiré.

5. Station d'approvisionnement en réactifs selon l'une des revendications 2 à 4, dans laquelle le système d'eau de refroidissement (KE) présente une unité de pompage (40), qui peut être raccordée électriquement au répartiteur de courant et dont le fonctionnement peut être surveillé, de préférence par le dispositif de surveillance (SE).

6. Station d'approvisionnement en réactifs selon l'une des revendications précédentes, dans laquelle un bloc d'eau froide (KW), transportable, est prévu pour le refroidissement de l'eau de refroidissement véhiculée par le système d'eau de refroidissement (KE).

7. Station d'approvisionnement en réactifs selon l'une des revendications précédentes, dans laquelle il est prévu une unité d'élévation de pression et de vaporisation (DVE), transportable, qui peut être raccordée au distributeur (DE), pour vaporiser de l'hydrogène liquéfié et l'amener au distributeur (DE).

8. Station d'approvisionnement en réactifs selon la revendication 7, dans laquelle l'unité d'élévation de pression et de vaporisation (DVE) peut être raccordée électriquement au répartiteur de courant et peut être surveillée en fonctionnement, de préférence par le dispositif de surveillance (SE).

9. Station d'approvisionnement en réactifs selon l'une des revendications précédentes, dans laquelle le conteneur d'armement (2), le bloc d'eau froide (KW) et/ou l'unité d'élévation de pression et de vaporisation (DVE) sont réalisés sous forme d'un conteneur normalisé de 20' ou d'un conteneur standard et, en particulier, sous forme d'un châssis-conteneur standard (2, 4, 6).

10. Station d'approvisionnement en réactifs selon l'une des revendications précédentes, dans laquelle des dispositifs (OV) sont logés, avec la possibilité d'en être retirés, dans le conteneur d'armement (2), pour le ravitaillement du sous-marin (44) en oxygène à très basse température.

11. Station d'approvisionnement en réactifs selon l'une des revendications précédentes, dans laquelle des dispositifs (NV) sont logés, avec la possibilité d'en être retirés, dans le conteneur d'armement (2), pour le ravitaillement du sous-marin (44) en azote.

12. Station d'approvisionnement en réactifs selon l'une des revendications 2 à 11, dans laquelle il est prévu un conteneur additionnel de transport (8) destiné à recevoir des objets d'armement, qui peut être raccordé électriquement au répartiteur de courant, dans le conteneur d'armement (2), pour l'alimentation en courant.
